# EUROPEAN PATENT SPECIFICATION

(11) **EP 1 908 921 B1**
(45) Date of publication and mention of the grant of the patent: **30.12.2015**
(21) Application number: 07253778.0
(22) Date of filing: 24.09.2007
(51) Int. Cl.: F01D 5/18, F01D 9/04

(54) **Method of impingement cooling a turbine airfoil and corresponding turbine airfoil**
Verfahren zur Prallkühlung einer Turbinenschaufel und zugehörige Turbinenschaufel
Procédé de refroidissement par impact d'une aube de turbine et aube de turbine associée

(30) Priority: 28.09.2006 US 529113
(43) Date of publication of application: 09.04.2008
(73) Proprietor: United Technologies Corporation, Hartford, CT 06101 (US)
(72) Inventor: Devore, Matthew, Manchester, CT 06040 (US); Bridges, Joseph W., Jr., Durham, CT 06422 (US); Paauwe, Corneil, Manchester, CT 06040 (US)
(74) Representative: Leckey, David Herbert

(56) References cited:
- EP-A1- 1 626 162
- EP-A2- 0 924 385
- EP-A2- 1 647 672
- US-A- 3 628 885
- US-A1- 2005 175 444

## Description

### Field of the Invention

This invention relates generally to airfoils, and more specifically to the impingement cooling of a large platform to airfoil fillet radius on a turbine airfoil.

### Background of the Invention

In a conventional turbine airfoil, cooling air is supplied to the airfoil through an impingement tube which has been inserted into and is located adjacent the internal wall of a hollow or cored airfoil. The air travels through the impingement tube and exits through small holes toward the airfoil wall. The air exiting the impingement tube is at a high velocity and provides impingement cooling on the airfoil wall. The air then flows along the wall of the airfoil until it exits through cooling holes in the airfoil surface, where the air finally functions to film cool the airfoil. The fillet between the airfoil and platform external surfaces is typically uncooled due to its small radius size (typically .045-.150 inches (1.14 - 3.81mm).

As the size of the airfoil fillet increases from .150 inches (3.81 mm) to upwards of an inch (25.4 mm) or greater, it becomes difficult to continue to ignore cooling of the filleted region of the airfoil. The large fillet increases the area and volume of material exposed to high temperatures such that it becomes necessary to provide a method of cooling to prevent part durability shortfalls such as oxidation and or thermal mechanical fatigue. It can therefore been seen that there is a need for an effective method of cooling large filleted airfoils which is not currently available to the field.

An airfoil having the features of the preamble of claim 4 is disclosed in EP-A-1647672.

### Summary of the Invention

It is an object of the present invention to provide a system for impingement cooling of a turbine airfoil with a large platform to airfoil fillet which overcomes the problems of the prior art described above.

It is another object of the present invention to provide for a method of producing an airfoil fillet with wall thicknesses similar to that of the adjacent airfoil wall.

It is a further object of the present invention to provide an impingement tube which follows the contour of both the airfoil and airfoil fillet.

It is yet another object of the invention to provide a combination of a thin walled airfoil fillet and impingement tube design which provides for optimum impingement cooling of an airfoil with a large platform to airfoil fillet radius.

From a first aspect, the invention provides a method: of impingement cooling a turbine airfoil as set forth in claim 1. From a second aspect the invention provides a turbine airfoil as set forth in claim 4.

The invention is directed to impingement cooling of turbine airfoils with large fillets. The casting process allows the ceramic airfoil core to follow the exterior shape of the airfoil as it transitions from the airfoil to fillet to platform. After casting of the airfoil and removing the ceramic core to produce hollow features within the airfoil, the described process provides the airfoil and fillet with similar wall thicknesses. This concept allows the fillet wall thickness to be maintained to a minimum to allow for effective cooling. A thin sheet metal impingement tube is then positioned within the hollow airfoil and is configured to follow the airfoil to fillet to platform contour at a prescribed distance from the internal wall (typically .02-.100 inches (0.51 - 2.54 mm)). Utilizing the thin walled fillet and impingement tube as described, it is then possible to effectively cool the fillet area. In operation, cooling air enters the turbine airfoil through the impingement tube and impinges against the internal airfoil and fillet wall as it exits through multiple holes in the impingement tube. The air then travels across the internal surface of the fillet until it turns and exits the airfoil or fillet through multiple cooling holes. The cooling air after exiting the airfoil functions to film cool the surface of the airfoil or fillet.

### Brief Description of the Drawings

For a better understanding of these and other objects of the invention, reference will be made to the following detailed description of the invention, which is to be read in association with the following drawings, wherein:
Fig. 1 is a side elevation in section illustrating the component parts of a jet engine;
Fig. 2 is an enlarged partial view showing a turbine vane located in the first stage of the turbine section of the engine;
FIG. 3 is a partial side sectional view of a conventional airfoil with a typical fillet and associated impingement tube.
FIG. 4 is a partial side sectional view of a conventional airfoil with a large fillet.
FIG. 5 is a sectional view of a conventional airfoil with a ceramic core.
FIG. 6 is a sectional view of a cored airfoil of the present invention.
FIG. 7 is a partial section view of the airfoil of Fig. 6 with an impingement tube in place.

### Detailed Description of the Invention

The incorporation of large fillets into turbine airfoils requires a special method of cooling the filleted region of the airfoil. The present invention provides impingement cooling to the airfoil fillet using a uniquely designed airfoil cooling tube. In the present invention the airfoil fillet is hollowed out by coring the airfoil fillet region in the casting process such that the fillet wall does not become too thick to cool. The present invention then incorporates an impingement tube designed to follow the airfoil to fillet to platform transition at a prescribed distance, and apply impingent air through holes in the impingement tube to the internal airfoil and fillet wall. The impinged air subsequently flows through airfoil and fillet holes to the airfoil external surface and provides film cooling to the airfoil fillet.

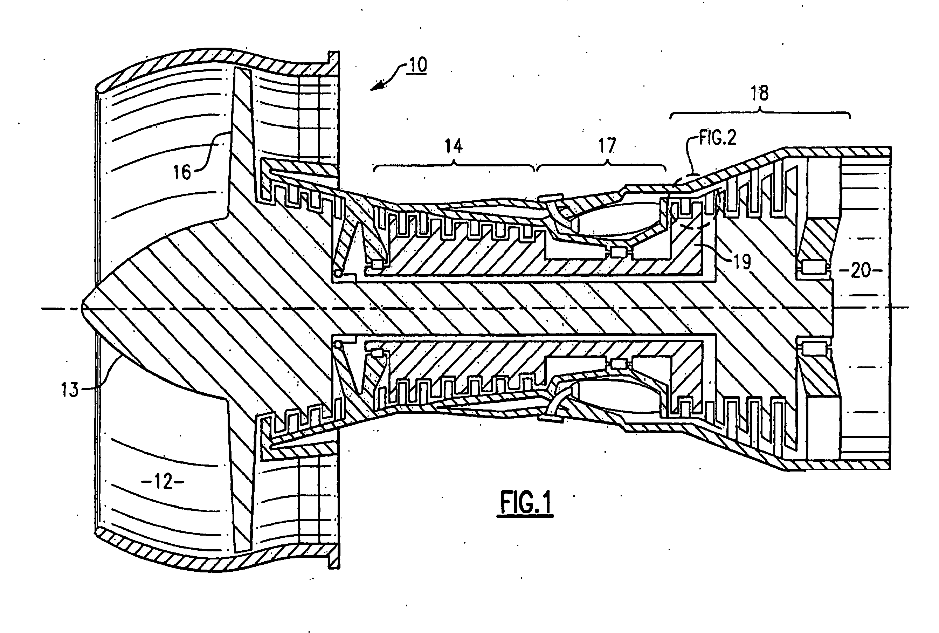

Referring initially to Fig. 1, there is shown the main components of a jet engine, generally referenced 10 in schematic outline. The engine includes a diffuser section 12 having a conical inlet 13 in which RAM air is initially compressed and then passed on to an axial compressor 14 by means of a fan 16 located at the entrance to the compressor. Compressed air from the last stage of the compressor is fed into a series of combustion chambers, one or which is depicted as 17, where the compressed air is mixed with fuel and is ignited. Gases from the combustors are passed on to the turbine section of the engine 18 where the hot gases are expanded. The turbine section of the engine is coupled directly to the compressor by a common shaft 19. The power developed in the turbine 18 is thus utilized to drive the compressor and other auxiliary engine components. Gases leaving the turbine 18 are further expanded in the exhaust nozzle 20 of the engine and are ejected at a velocity greater than the flight velocity to produce thrust.

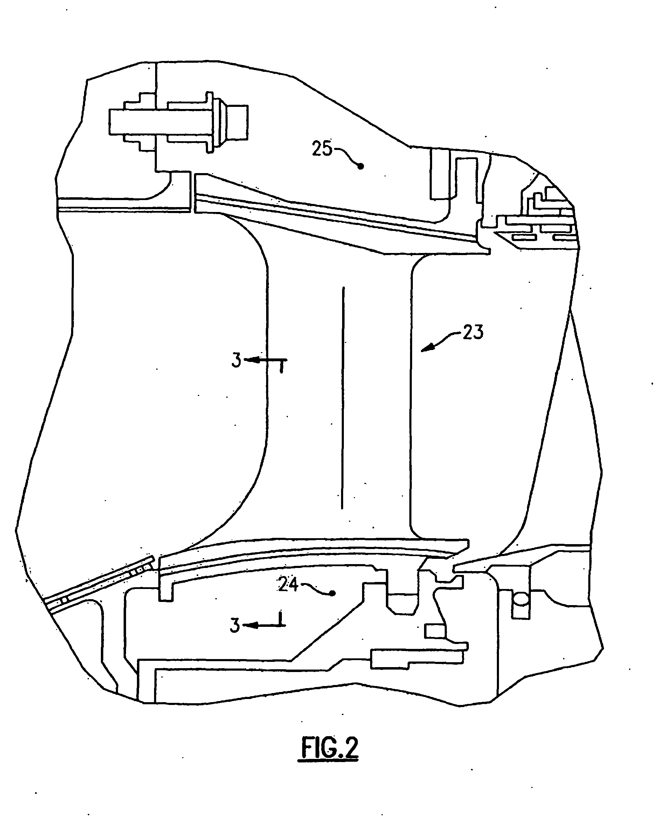

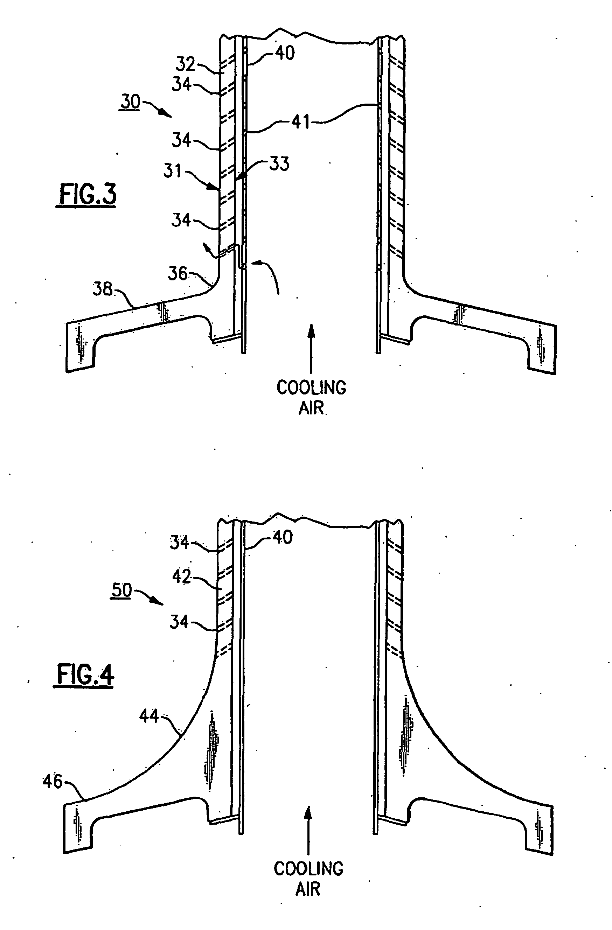

Fig. 2 is an enlarged view of an airfoil 23 located in the first stage of the turbine 18, which is exposed to gases from the combustion chamber that are at relatively high temperatures and pressures. Accordingly, airfoil cooling which is supplied to the airfoil from areas 24 and 25 is at a premium. Fig. 3 is a section taken through airfoil 23 further illustrating the internal construction of the airfoil.

Figure 3 shows a section of a hollow airfoil 30, having an airfoil wall 32, small fillet 36 and platform 38. The airfoil wall 32 consists of an external wall surface 31 and an internal wall surface 33 as well as a plurality of cooling holes 34. A thin sheet metal impingement tube 40 is positioned adjacent internal wall 33 at a typical distance of .020 to .100 inches (0.51 - 2.54 mm). The impingement tube 40 also contains a plurality of cooling holes 41. In this arrangement cooling air is supplied to the hollow airfoil through the impingement tube. Air exits the impingement tube by impinging onto the internal airfoil surface 33 through holes 41 in the impingement tube. The air then flows along the internal wall of the airfoil until its exits through cooling holes 34 in the airfoil surface, where it is finally used to film cool the external airfoil surface 31. The fillet 36 remains uncooled in this typical airfoil section

As the size of the airfoil fillet increases, it becomes difficult to ignore cooling this region of the airfoil and airfoil fillet. Eventually the external fillet area exposed to hot gas temperatures and the increased material contained within the fillet require that it be cooled in order to maintain part life.

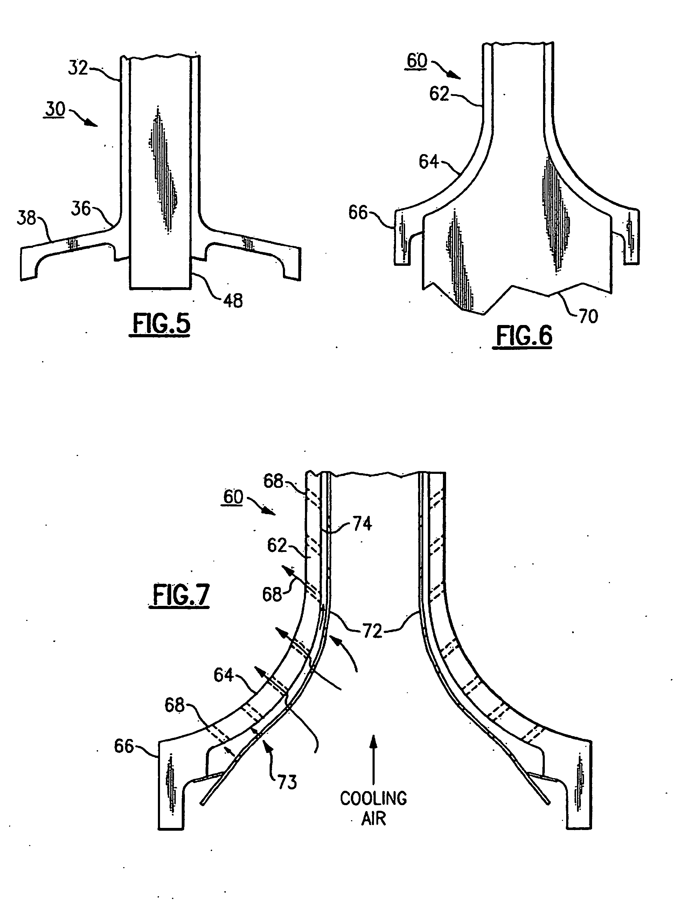

In Figure 4, airfoil 50 shows the effect on fillet area of increasing the fillet radius by conventional means. In order to cool a big fillet it first becomes necessary to hollow out the fillet at the casting stage. In airfoil manufacture the internal cavities of the airfoil are produced using ceramic cores. In the typical airfoil shown in Figure 5, the airfoil ceramic core 48 extends radially outward of the airfoil 30.

In order to allow proper cooling of a fillet similar to that of Figure 4 it is necessary first to hollow the fillet region of the airfoil. It has been found that this can be accomplished by allowing the ceramic core 70 (Fig 6) to follow the exterior shape of the airfoil as it transitions from airfoil 60 to fillet 64 to platform 66. This arrangement is shown in Figure 6. Note that the airfoil wall 62 increases in thickness as the fillet transitions from the airfoil to the platform. This is done in order to allow the core to shift radially with casting process variation without creating a minimum wall condition in the platform or fillet.

With the airfoil and fillet hollowed, it now becomes necessary to insert an impingement tube 72 (Fig. 7) into the airfoil which follows the airfoil to fillet 64 to platform 66 contour. Figure 7 shows the big fillet airfoil 60 with an impingement tube 72 in place.

With a hollow airfoil fillet with impingement tube inserted it now becomes possible to adequately cool big fillets. Cooling air will enter into the impingement tube 72 and impinge onto the internal airfoil and fillet wall surface 74 as it exits through holes 73 in the impingement tube 72. The air will then travel across the surface of the airfoil and fillet until it turns and exits the airfoil fillet through cooling holes 68 which acts to film cool the external surface of the fillet.

While the present invention has been particularly shown and described with reference to the preferred mode as illustrated in the drawing, it will be understood by one skilled in the art that various changes in detail may be effected therein without departing from the scope of the invention as defined by the claims.

## Claims

1. A method of impingement cooling a turbine airfoil (60) with a platform (66) to airfoil fillet (64) radius which comprises:
providing an airfoil (60) having an airfoil fillet (64) having a defined contour and a minimum fillet wall thickness with said airfoil (60) having a plurality of cooling holes (68) through the fillet wall (62); and **characterised by**:
positioning an impingement tube (72) inside said airfoil so as to follow the fillet contour;
applying impingent air through said tube (72) onto the airfoil and fillet walls, with said impinged air thereafter flowing out through said fillet cooling holes (68) to thereby provide film cooling to the airfoil fillet (64).

2. The method of claim 1 comprising coring the airfoil fillet (64) such that the fillet wall (62) is maintained at a minimum thickness.

3. The method of claim 2 in which the fillet (64) has been cored such that the backwall (74) of the fillet (64) substantially follows the exterior contour of the fillet surface.

4. A turbine airfoil (60) which includes airfoil side walls and an airfoil fillet (64) having a fillet wall maintained at a thickness similar to that of the airfoil side walls (62), with said airfoil containing a plurality of cooling holes (68) through the fillet wall; **characterised in that** it further comprises an impingement tube (72) positioned inside said airfoil adjacent said fillet (64) and which follows the fillet contour and having impingement holes (73) arranged to impinge cooling air onto the interior fillet surface; whereby in use impingent air may pass through said tube (72) to the airfoil and fillet walls with said impinged air thereafter flowing out through said fillet cooling holes (68) to provide film cooling to the airfoil fillet (64).

5. The airfoil of claim 4 in which the airfoil fillet backwall (74) is contoured to follow the contour of the exterior fillet surface.

## Patentansprüche

1. Verfahren zur Prallkühlung einer Turbinenschaufel (60) mit einem Radius von Plattform (66) bis Schaufelprofil (64), das Folgendes umfasst:
Bereitstellen einer Schaufel (60) mit einem Schaufelprofil (64) mit einem definierten Umriss und einer minimalen Profilwanddicke, wobei die Schaufel (60) eine Mehrzahl von Kühlöffnungen (68) durch die Profilwand (62) aufweist; und **gekennzeichnet durch**:
Anordnen eines Prallrohres (72) im Inneren der Schaufel, um dem Profilumriss zu folgen;
Anwenden von Prallluft **durch** das Rohr (72) auf die Schaufel- und Profilwände, wobei die Prallluft **durch** die Profilkühlöffnungen (68) herausströmt und **dadurch** eine Filmkühlung des Schaufelprofils (64) bereitstellt.

2. Verfahren nach Anspruch 1, umfassend Kernen des Schaufelprofils (64) derart, dass die Profilwand (62) auf einer Mindestdicke gehalten wird.

3. Verfahren nach Anspruch 2, wobei das Profil (64) derart gekernt wurde, dass die Rückwand (74) des Profils (64) im Wesentlichen dem Außenumriss der Profiloberfläche folgt.

4. Turbinenschaufel (60), die Schaufelseitenwände und ein Schaufelprofil (64) aufweist, wobei eine Profilwand auf einer Dicke gehalten ist, die ähnlich wie die der Schaufelseitenwände (62) ist, wobei die Schaufel eine Mehrzahl von Kühlöffnungen (68) durch die Profilwand enthält;
**dadurch gekennzeichnet, dass** sie ferner ein Prallrohr (72) umfasst, das im Inneren der Schaufel benachbart zum Profil (64) angeordnet ist und dem Profilumriss folgt und Prallöffnungen (73) aufweist, die dazu angeordnet sind, Kühlluft auf die innere Profilfläche prallen zu lassen; wodurch bei der Benutzung Prallluft durch das Rohr (72) zu den Schaufel- und Profilwänden gelangen kann, um eine Filmkühlung des Schaufelprofils (64) bereitzustellen.

5. Schaufel nach Anspruch 4, wobei die Schaufelprofilrückwand (74) einen derartigen Umriss aufweist, dass sie dem Umriss der Profilaußenfläche folgt.

## Revendications

1. Procédé de refroidissement par contact d'un profilé (60) doté d'une plateforme (66) jusqu'au rayon du flanc de raccord (64) du profilé, qui comprend :
l'utilisation d'un profilé (60) comportant un flanc de raccord (64) du profilé présentant un contour défini et une épaisseur minimale de flanc de raccord avec ledit profilé (60) comportant une pluralité de trous de refroidissement (68) à travers la paroi (62) du flanc de raccord ; et **caractérisé par** :
le positionnement d'un tube de contact (72) à l'intérieur dudit profilé, de manière à suivre le contour du flanc de raccord ;
l'application d'air de contact à travers ledit tube (72) sur les parois du profilé et du flanc de raccord, alors que l'air impacté s'écoule ensuite à travers lesdits trous de refroidissement (68) du flanc de raccord pour engendrer ainsi un refroidissement de film sur le flanc de raccord (64) du profilé.

2. Procédé selon la revendication 1, comprenant l'usinage du flanc de raccord (64) du profilé de sorte que la paroi (62) du flanc de raccord soit maintenue à une épaisseur minimale.

3. Procédé selon la revendication 2, dans lequel le flanc de raccord (64) a été usiné de sorte que la paroi arrière (74) du flanc de raccord (64) suit sensiblement le contour extérieur de la surface du flanc de raccord.

4. Profilé de turbine (60) comprenant des parois latérales de profilé et un flanc de raccord (64) du profilé comportant une paroi de flanc de raccord maintenue à une épaisseur similaire à celle des parois latérales du profilé (62), alors que ledit profilé contient une pluralité de trous de refroidissement (68) à travers la paroi du flanc de raccord ;
**caractérisé en ce qu'**il comprend en outre un tube de contact (72) positionné à l'intérieur dudit profilé à côté dudit flanc de raccord (64) et qui suit le contour du flanc de raccord et comportant des trous de contact (73) disposés pour impacter l'air de refroidissement à la surface du flanc de raccord intérieur ; moyennant quoi en cours d'utilisation, l'air de contact peut traverser ledit tube (72) jusqu'au profilé et jusqu'aux parois de flanc de raccord pour permettre un refroidissement du film sur le flanc de raccord (64) du profilé.

5. Profilé selon la revendication 4, dans lequel la paroi arrière (74) du flanc de raccord de profilé suit un contour pour suivre le contour de la surface extérieure du flanc de raccord.
